# EUROPEAN PATENT APPLICATION

(11) **EP 4 478 335 A1**
(43) Date of publication of application: **18.12.2024**
(21) Application number: 22932555.0
(22) Date of filing: 21.03.2022
(51) Int. Cl.: G09B 9/00, G06F 30/20

(54) **METHOD AND DEVICE FOR CONSTRUCTING VIRTUAL ENVIRONMENT FOR AUTONOMOUS DRIVING**

(71) Applicant: Huawei Technologies Co., Ltd., Shenzhen, Guangdong 518129 (CN)
(72) Inventor: GAN, Guodong, Shenzhen, Guangdong 518129 (CN); MA, Sha, Shenzhen, Guangdong 518129 (CN)
(74) Representative: Pfenning, Meinig & Partner mbB
(86) International application number: PCT/CN2022/082068
(87) International publication number: WO 2023/178486

(57) **Abstract**

This application pertains to the field of autonomous driving system testing, and specifically provides a construction method for an autonomous driving virtual environment. The method includes: loading a virtual traffic scenario, where a first virtual object and a second virtual object are configured in the virtual traffic scenario; obtaining control information, where the control information is used to control the first virtual object to travel in the virtual traffic scenario; and obtaining a control signal of a first driving simulator when the second virtual object is capable of affecting traveling of the first virtual object, where the control signal of the first driving simulator is used to control traveling of the second virtual object. Based on technical solutions provided in this application, an autonomous driving system can better conform to a real driving environment during a test, so that the test is more real, and randomness and comprehensiveness of the test are improved.

## Description

### TECHNICAL FIELD

This application relates to the field of autonomous driving system testing technologies, and in particular, to a construction method and apparatus for an autonomous driving virtual environment, a running method and apparatus for an autonomous driving system, an apparatus for testing the autonomous driving system, a computing device, and a computer-readable storage medium.

### BACKGROUND

As functions of an autonomous driving system become increasingly complex, how to effectively verify safety and stability of the autonomous driving system becomes increasingly important.

Currently, a method for testing the autonomous driving system mainly includes a virtualized simulation test and a field road test on a closed site.

For the former, the autonomous driving system is tested mainly by manually editing a test scenario. However, in this method, a real-time response to a real driving behavior is absent, and a game with a real driving behavior of each vehicle driver in a traffic environment cannot be reflected.

For the latter, the functions of the autonomous driving system can be verified in a real environment. However, a test cost is high, efficiency is low, and it is difficult to implement a test for a dangerous working condition.

### SUMMARY

In view of the foregoing problems in the conventional technology, this application provides a construction method and apparatus for an autonomous driving virtual environment, a running method and apparatus for an autonomous driving system, an apparatus for testing the autonomous driving system, a computing device, and a computer-readable storage medium. According to this application, traveling realness of a virtual vehicle in the autonomous driving virtual environment can be improved.

To achieve the foregoing objective, according to a first aspect of this application, a construction method for an autonomous driving virtual environment is provided. The method includes: loading a virtual traffic scenario, where a first virtual object and a second virtual object are configured in the virtual traffic scenario; obtaining control information, where the control information is used to control the first virtual object to travel in the virtual traffic scenario; and obtaining a control signal of a first driving simulator when the second virtual object is capable of affecting traveling of the first virtual object, where the control signal of the first driving simulator is used to control traveling of the second virtual object.

As described above, the autonomous driving virtual environment is constructed by combining a simulation technology with a physical driving simulator. The first virtual object and the second virtual object are configured in the autonomous driving virtual environment. When the second virtual object is capable of affecting the traveling of the first virtual object, a driver takes over the first driving simulator to control the traveling of the second virtual object, so that a real driving behavior is introduced into the virtual environment. This can reflect a game with the real driving behavior of the driver of the driving simulator that is bound to the second virtual object, thereby improving realness of the autonomous driving virtual environment. In addition, due to intervention of real-time control by the driver, randomness of a traveling route of a vehicle in a test is increased, thereby improving comprehensiveness of the test. In addition, the virtual traffic scenario is used. Therefore, compared with that in a field road test in a real environment, test costs can be reduced, and test efficiency can be improved. In addition, it is set that when the second virtual object is capable of affecting the traveling of the first virtual object, the control signal of the first driving simulator controls the traveling of the second virtual object. It can be learned that when the second virtual object does not affect the traveling of the first virtual object, the driver may not take over and control the traveling of the second virtual object. This can save manpower for controlling a second virtual object of this type.

In an implementation of the first aspect, the method further includes: When the second virtual object does not affect the traveling of the first virtual object, the second virtual object travels in the virtual traffic scenario based on first data, where the first data is traveling data that is of a real vehicle and that is obtained from a real traffic scenario.

That the second virtual object does not affect the traveling of the first virtual object may be understood as the following: The second virtual object does not contact the first virtual object, or a traveling behavior or a traveling path of the first virtual object does not change due to a traveling behavior of the second virtual object. For example, the second virtual object is far enough away from the first virtual object (for example, the second virtual object and the first virtual object are in different lanes, or are in a same lane but far away from each other). For another example, the second virtual object is located behind the first virtual object, but a moving speed of the second virtual object is not higher than that of the first virtual object. For another example, the second virtual object is located in front of the first virtual object, but a moving speed of the second virtual object is much higher than that of the first virtual object. In this case, the second virtual object does not collide with the first virtual object. Therefore, the driver does not need to intervene in the traveling of the second virtual object, thereby releasing manpower for controlling the second virtual object. In addition, in this case, traveling data of the second virtual object is set to traveling data of a real vehicle in an actual traffic scenario. This is equivalent to reproduction of a real traffic scenario. In this way, a driving behavior of the second virtual object can fit an actual driving scenario. In another aspect, with reference to what is proposed in the foregoing, when the second virtual object is capable of affecting the traveling of the first virtual object, the driver takes over the second virtual object by using the driving simulator, so that a traveling trajectory of the second virtual object can be changed, and collision with the first virtual object can be reduced or avoided. In this way, a test on the first virtual object is enabled to continue, and valid test time is prolonged.

In an implementation of the first aspect, the method further includes: When the second virtual object does not affect the traveling of the first virtual object, the second virtual obj ect travels in the virtual traffic scenario based on second data, where the second data is data that enables the second virtual object to autonomously travel in the virtual traffic scenario.

As described above, when the second virtual object does not affect the first virtual object, the traveling data of the second virtual object is set to data that enables the second virtual object to autonomously travel in the virtual traffic scenario, so that the traveling data (for example, a traveling trajectory) of the second virtual object is more diversified. This facilitates the test on the first virtual object.

In an implementation of the first aspect, the method further includes: Whether the second virtual object affects the traveling of the first virtual object is determined based on one or more of the following: a distance between the second virtual object and the first virtual object; a traveling direction of the second virtual object or a traveling direction of the first virtual object; a traveling speed of the second virtual object or a traveling speed of the first virtual object; a lane in which the second virtual object or the first virtual object is located; a traveling trajectory of the second virtual object or a traveling trajectory of the first virtual object; and a dynamics model of the second virtual object or a dynamics model of the first virtual object.

As described above, whether the second virtual object affects the traveling of the first virtual object is determined based on one or more of the foregoing factors, and an occasion at which the second virtual object is taken over by the driver operating the driving simulator may be flexibly set based on a test requirement.

In an implementation of the first aspect, the method further includes: highlighting the second virtual object.

As described above, the second virtual object is highlighted, and in particular, the second virtual object that affects the first virtual object is highlighted. This helps a controller of the first driving simulator clearly and plainly observe a traveling status of the second virtual object, to determine an occasion for taking over the second virtual object.

In an implementation of the first aspect, the method further includes one or more of the following: loading a fault working condition to the first virtual object or the second virtual object; and loading a dangerous working condition to the virtual traffic scenario.

As described above, the fault working condition is loaded to the first virtual object or the second virtual object, and/or the dangerous working condition is loaded to the virtual traffic scenario, so that the autonomous driving system can be tested in terms of dealing with an emergency. Further, comprehensiveness of the test can be improved.

In an implementation of the first aspect, the method further includes: The first virtual object corresponds to at least one dynamics model, and the second virtual object corresponds to at least one dynamics model.

As described above, in a real traffic scenario, different traffic participants may have different dynamics models. Therefore, the first virtual object and the second virtual object each correspond to at least one dynamics model, so that the virtual object can simulate traveling statuses and traveling trajectories of different types of vehicles. In this way, a traveling status or a traveling trajectory of a virtual vehicle in the virtual traffic environment is more real. In addition, because the first virtual object may correspond to various dynamics models, an autonomous driving system applied to various types of vehicles may be trained.

In an implementation of the first aspect, the method further includes: configuring a third virtual object in the virtual traffic scenario; and obtaining a control signal of a second driving simulator, where the control signal of the second driving simulator is used to control traveling of the third virtual object.

As described above, regardless of whether the third virtual object affects the traveling of the first virtual object, the second driving simulator controls traveling of the third virtual object in the virtual traffic scenario from the beginning. In this way, different driving styles may be introduced, and traveling randomness of the third virtual object is increased, so that the autonomous driving virtual environment better conforms to a real driving environment.

According to a second aspect of this application, a construction apparatus for an autonomous driving virtual environment is provided. The apparatus includes a loading module and an obtaining module. The loading module is configured to load a virtual traffic scenario, where a first virtual object and a second virtual object are configured in the virtual traffic scenario. The obtaining module is configured to obtain control information, where the control information is used to control the first virtual object to travel in the virtual traffic scenario. The obtaining module is further configured to: obtain a control signal of a first driving simulator when the second virtual object is capable of affecting traveling of the first virtual object, where control information of the first driving simulator is used to control traveling of the second virtual object.

In an implementation of the second aspect, the obtaining module is further configured to: when the second virtual object does not affect the traveling of the first virtual object, enable the second virtual object to travel in the virtual traffic scenario based on first data, where the first data is traveling data that is of a real vehicle and that is obtained from a real traffic scenario.

In an implementation of the second aspect, the obtaining module is further configured to: when the second virtual object does not affect the traveling of the first virtual object, enable the second virtual object to travel in the virtual traffic scenario based on second data, where the second data is data that enables the second virtual object to autonomously travel in the virtual traffic scenario.

In an implementation of the second aspect, whether the second virtual object affects the traveling of the first virtual object is determined based on one or more of the following: a distance between the second virtual object and the first virtual object; a traveling direction of the second virtual object or a traveling direction of the first virtual object; a traveling speed of the second virtual object or a traveling speed of the first virtual object; a lane in which the second virtual object or the first virtual object is located; a traveling trajectory of the second virtual object or a traveling trajectory of the first virtual object; and a dynamics model of the second virtual object or a dynamics model of the first virtual object.

In an implementation of the second aspect, the apparatus further includes: a display module, configured to highlight the second virtual object.

In an implementation of the second aspect, the loading module is further configured to load a fault working condition to the first virtual object or the second virtual object. The loading module is further configured to load a dangerous working condition to the virtual traffic scenario.

In an implementation of the second aspect, the first virtual object corresponds to at least one dynamics model, and the second virtual object corresponds to at least one dynamics model.

In an implementation of the second aspect, the obtaining module is further configured to obtain a control signal of a second driving simulator, where a control signal of a second driving simulation controller is used to control traveling of a third virtual object, and the third virtual object is an object configured in the virtual traffic scenario.

As described above, for beneficial effects of the implementations of this aspect, refer to the beneficial effects of the implementations of the first aspect.

According to a third aspect of this application, a running method for an autonomous driving system is provided. The method includes: when a second virtual object is capable of affecting traveling of a first virtual object, controlling, by using a first driving simulator, the second virtual object to travel in an autonomous driving virtual environment, and obtaining traveling information of the second virtual object by using the autonomous driving system. The autonomous driving system outputs control information based on the traveling information of the second virtual object, where the control information is used to control the first virtual object to travel in the virtual traffic scenario. The second virtual object and the first virtual object are configured in the autonomous driving virtual environment.

In an implementation of the third aspect, the method further includes: The autonomous driving system obtains traveling information of a third virtual object, where the traveling information of the third virtual object is associated with a control signal of a second driving simulator. The autonomous driving system further outputs the control information based on the traveling information of the third virtual object.

In an implementation of the third aspect, the method further includes: outputting traveling information of the first virtual object, where the traveling information of the first virtual object is used to test the autonomous driving system.

According to a fourth aspect of this application, a running apparatus for an autonomous driving system is provided. The apparatus includes: an obtaining module, configured to: when a second virtual object is capable of affecting traveling of a first virtual object, control, by using a first driving simulator, the second virtual object to travel in an autonomous driving virtual environment, and obtain traveling information of the second virtual object by using the autonomous driving system; and a control module, configured by the autonomous driving system to output control information based on the traveling information of the second virtual object, where the control information is used to control the first virtual object to travel in the virtual traffic scenario. The second virtual object and the first virtual object are configured in the autonomous driving virtual environment.

In an implementation of the fourth aspect, the control module is further configured by the autonomous driving system to obtain traveling information of a third virtual object, where the traveling information of the third virtual object is associated with a control signal of a second driving simulator. The autonomous driving system further outputs the control information based on the traveling information of the third virtual object.

In an implementation of the fourth aspect, the control module is further configured to output traveling information of the first virtual object, where the traveling information of the first virtual object is used to test the autonomous driving system.

According to a fifth aspect of this application, an apparatus for testing an autonomous driving system is provided. The apparatus includes: a driving simulator, an autonomous driving virtual environment constructed according to the construction method in any implementation of the first aspect, and the autonomous driving system, where the autonomous driving virtual environment is communicatively connected to the driving simulator, and is communicatively connected to the autonomous driving system.

According to a sixth aspect of this application, a computing device is provided, including a processor and a memory. The memory stores program instructions, and when the program instructions are executed by the processor, the processor is enabled to perform the construction method for the autonomous driving virtual environment in any implementation of the first aspect, or to perform the running method for the autonomous driving system in any implementation of the third aspect.

According to a seventh aspect of this application, a computer-readable storage medium is provided. The computer-readable storage medium stores program instructions, and when the program instructions are executed by a computer, the computer is enabled to perform the construction method for the autonomous driving virtual environment in any implementation of the first aspect, or to perform the running method for the autonomous driving system in any implementation of the third aspect.

According to an eighth aspect of this application, a computer program product is provided. When the computer program product runs on one or more processors, the construction method for the autonomous driving virtual environment in any implementation of the first aspect is implemented, or the running method for the autonomous driving system in any implementation of the third aspect is performed.

These aspects and other aspects of this application are more concise and comprehensible in descriptions of the following (a plurality of) embodiments.

### BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, features that are commonly used in the field of this application and that are not necessary for this application may be omitted, or features that are not necessary for this application are additionally shown. A combination of the features shown in the accompanying drawings is not intended to limit this application. In addition, in the full text of this specification, the same reference signs refer to the same content. The accompanying drawings are specifically described below.
FIG. 1 is a diagram of an architecture applied to a simulation test scenario of an autonomous driving system according to an embodiment of this application;
FIG. 2 is a flowchart of a construction method for an autonomous driving virtual environment according to an embodiment of this application;
FIG. 3a to FIG. 3e are diagrams of different examples in which a second virtual object is capable of affecting a first virtual object according to an embodiment of this application;
FIG. 4 is a diagram of loading a flat tire working condition to a second virtual vehicle according to an embodiment of this application;
FIG. 5 is a diagram of loading an occurred dropping or emergency braking working condition to a second virtual vehicle according to an embodiment of this application;
FIG. 6 is a diagram of an application of an autonomous driving virtual environment according to an embodiment of this application;
FIG. 7a and FIG. 7b are diagrams of applying an autonomous driving virtual environment to an admission standard test of an autonomous driving system according to an embodiment of this application;
FIG. 8 is a diagram of a structure of a construction apparatus for an autonomous driving virtual environment according to an embodiment of this application;
FIG. 9 is a flowchart of a running method for an autonomous driving system according to an embodiment of this application;
FIG. 10 is a diagram of a structure of a running apparatus for an autonomous driving system according to an embodiment of this application;
FIG. 11 is a diagram of a structure of a computing device according to an embodiment of this application; and
FIG. 12 is a diagram of a structure of another computing device according to an embodiment of this application.

### DESCRIPTION OF EMBODIMENTS

The following further describes the technical solutions provided in this application with reference to the accompanying drawings and embodiments. It should be understood that a system structure and a service scenario provided in embodiments of this application are mainly used to describe possible implementations of the technical solutions of this application, and should not be construed as a unique limitation on the technical solutions of this application. A person of ordinary skill in the art may learn that, with evolution of a system structure and emergence of a new service scenario, the technical solutions provided in this application are also applicable to a similar technical problem.

It should be understood that a virtual environment-based autonomous driving solution provided in embodiments of this application includes a construction method and apparatus for an autonomous driving virtual environment, a running method and apparatus for an autonomous driving system, an apparatus for testing the autonomous driving system, a computing device, a computer-readable storage medium, and a computer program product. Because problem-resolving principles of these technical solutions are the same or similar, in descriptions of the following specific embodiments, some repeated parts may not be described again, but it should be considered that these specific embodiments are mutually referenced and may be combined.

A scenario to which the virtual environment-based autonomous driving solution provided in embodiments of this application may be applied is first described. In some embodiments, the autonomous driving solution may be used to perform a simulation test on an autonomous driving system, to test functions or performance of the autonomous driving system in different traffic scenarios. In some embodiments, the autonomous driving solution may also be used to train the autonomous driving system, for example, perform repetitive training on an autonomous driving algorithm of the autonomous driving system, to improve stability of the autonomous driving algorithm, or load different scenarios for training, to improve completeness of an autonomous driving algorithm function. In some embodiments, the autonomous driving solution may be further used to train and practice a vehicle driven by a driver.

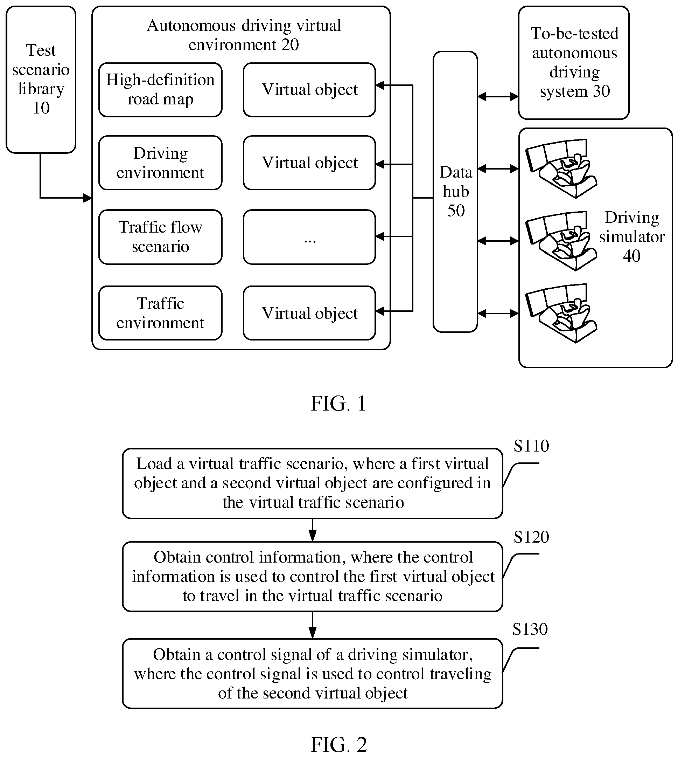

The following describes an architecture of the virtual environment-based autonomous driving solution provided in embodiments of this application. Architectures in the foregoing application scenarios are the same or similar. Therefore, only an architecture applied to a simulation test scenario of an autonomous driving system is used as an example for description herein. As shown in FIG. 1, the architecture applied to the simulation test scenario of the autonomous driving system may include a test scenario library 10, an autonomous driving virtual environment 20, a tested autonomous driving system 30, a driving simulator 40, and a data hub 50.

The test scenario library 10 may provide a plurality of virtual traffic scenarios. The traffic scenario may include a road condition, a traffic facility, a ground object and topography, a meteorological condition, a traffic activity of another traffic participant, and the like. In this embodiment of this application, different traffic scenarios may be preset, and loaded to the autonomous driving virtual environment 20 in an optional manner. For example, the different traffic scenarios may include a plurality of traffic flow scenarios (for example, different traffic flow scenarios with traffic congestion or traffic smoothness), a plurality of traffic environment scenarios (for example, scenarios with different traffic environments such as a highway, a township road, a mountain road, a road in a cell, and a crossroad), a plurality of driving environment (for example, a natural environment like a snowy day, a rainy day, a night, or street lighting) scenarios, a plurality of dangerous working condition scenarios (for example, a scenario of a working condition like an unexpected vehicle fault (for example, a flat tire), accumulated ice on a road surface, or a rainstorm), and the like. The test scenario library 10 may further provide a loaded high-definition map of a road, and the like. It should be understood that the foregoing different scenarios may form, in an individual manner or a combination manner, traffic scenarios used for different test functions. In addition, these scenarios may be loaded to the autonomous driving virtual environment 20 in an individual manner or a combination manner. The foregoing scenarios may be edited and stored in advance, or may be edited and modified in real time.

The autonomous driving virtual environment 20 may also be referred to as a simulation environment. The autonomous driving virtual environment 20 is used for rendering, display, and the like of a loaded virtual traffic scenario. A virtual object is further loaded in the autonomous driving virtual environment 20, and the virtual object may automatically travel in a loaded traffic scenario, or travel under control. A dynamics model of a transportation means may be configured for the virtual object, that is, the virtual object is used to simulate the transportation means. For example, when a vehicle dynamics model is configured, the virtual object simulates a vehicle. The autonomous driving virtual environment 20 may be implemented by running in a server. For example, the server may be a graphics workstation server, a cluster server, a cloud server, or the like.

The tested autonomous driving system 30 includes an autonomous driving algorithm. The autonomous driving system 30 may exist in a form of software, or may exist in a form of hardware. The hardware may be a chip (for example, a central processing unit (Central Processing Unit, CPU) or a microprocessor (Micro Control Unit, MCU)) on which the autonomous driving algorithm runs, a board, or an electronic device like a vehicle-mounted apparatus (for example, a mobile data center (Mobile Data Center, MDC) or an on-board computer). The autonomous driving system 30 may communicate with the autonomous driving virtual environment 20, to control traveling of a virtual object in a virtual traffic scenario. In this embodiment of this application, the autonomous driving system 30 may obtain required data from the autonomous driving virtual environment 20, and output a control instruction based on the obtained data to control the traveling of the virtual object. The required data obtained by the autonomous driving system 30 provides the autonomous driving system 30 with an autonomous driving algorithm for use. The data includes, for example, vehicle status information such as a traveling speed and a state of charge/fuel of the controlled virtual object, location information of the virtual object, perception information such as a distance to a surrounding virtual object or a location of the surrounding virtual object, environment information, or the like.

The driving simulator 40 is configured to: respond to an operation of a driver (an operator of the driving simulator 40) and control traveling of a virtual object in the autonomous driving virtual environment 20. The driving simulator is generally equipped with an apparatus for simulating a vehicle manipulation component, for example, a steering wheel, an acceleration pedal, a braking pedal, and a gear mechanism. The driver may implement a driving behavior by operating the manipulation component. The driving simulator responds to an operation of the driver, and sends a corresponding control instruction to the autonomous driving virtual environment 20, to control traveling of a virtual object in the autonomous driving virtual environment 20. The driving simulator further has a display, to display, to the driver, a virtual traffic scenario rendered by the autonomous driving virtual environment 20 and a virtual object traveling in the traffic scenario. The driving simulator may further have a speaker, to play wind noise, vehicle noise, and the like that are simulated during traveling of the controlled virtual object.

The data hub 50 is configured to implement data exchange and mapping. For example, the data hub 50 transmits, to the driving simulator 40 for displaying, data of a virtual traffic scenario rendered by the autonomous driving virtual environment 20 in real time and data of a virtual object traveling in the traffic scenario. For another example, the data hub 50 transmits, to the autonomous driving system 30, data (for example, the vehicle status information, the location information, and the perception information) that is required by the autonomous driving system 30 and that is in the autonomous driving virtual environment 20. For another example, the data hub 50 transmits a control instruction of the autonomous driving system 30 or the driving simulator 40 to the autonomous driving virtual environment 20, to control a corresponding virtual object. The data hub may be implemented by using a data switching device, for example, a switch or a router.

There may be one or more autonomous driving systems 30 or one or more driving simulators 40. Each autonomous driving system 30 or driving simulator 40 may control a virtual object in the autonomous driving virtual environment 20. Before the simulation test starts, a virtual object controlled by the autonomous driving system 30 or the driving simulator 40 may be bound. In a simulation test process, the bound virtual object may be changed.

The following describes a working principle for testing an autonomous driving system in this architecture.

Before the test starts, a traffic scenario required for the simulation test for the autonomous driving system may be first selected from the test scenario library 10, and the selected traffic scenario is loaded to the autonomous driving virtual environment 20. The autonomous driving virtual environment 20 includes the loaded traffic scenario for testing, and further includes a loaded virtual object.

A virtual object to be controlled by each of the autonomous driving system 30 and the driving simulator 40 is bound. For example, in this embodiment, an autonomous driving system 30 is bound to control a virtual object, and a driving simulator 40 is bound to control another virtual object. It should be noted herein that the autonomous driving virtual environment 20 may further include other unbound virtual objects, and these unbound virtual objects may automatically travel according to a predetermined traveling rule, or travel according to a predetermined trajectory in the loaded virtual traffic scenario.

When the test is being performed, in one aspect, the autonomous driving system 30 obtains required data (for example, the vehicle status information, the location information, and the perception information) through the data hub 50, and generates a control instruction based on the autonomous driving algorithm in the autonomous driving system 30. The control instruction is transmitted to the autonomous driving virtual environment 20 through the data hub 50, to control traveling of the bound virtual object. It can be learned that a traveling path of the virtual object represents a traveling path planned by the tested autonomous driving algorithm.

In another aspect, the driver may perform an operation by using the driving simulator 40. The driving simulator 40 generates a control instruction in response to the operation of the driver. The control instruction is transferred through the data hub 50, and acts on the virtual object bound to the driving simulator 40, to control traveling of the bound virtual object. In addition, in the test process, when it is determined that another unbound virtual object may affect the traveling of the virtual object bound to the autonomous driving system 30, the driving simulator 40 may be rebound to the unbound virtual object, to control traveling of the virtual object.

It can be learned from the foregoing that, in this simulation test solution for the autonomous driving system, in one aspect, a simulation technology is combined with a driving simulator, to implement a more real simulation of a driving game between vehicles. In another aspect, due to intervention of a driver in real-time control, randomness of a traveling route of a vehicle in a test is increased, and further, comprehensiveness of the test is improved. In addition, because the driving simulator 40 may be rebound to another virtual object that affects the autonomous driving system 30 in the test process, pertinence and effectiveness, for testing the autonomous driving system, of the virtual object controlled by the driver are improved.

Further refer to the figures. The following describes in detail a construction method for an autonomous driving virtual environment provided in an embodiment of this application.

FIG. 2 is a flowchart of a construction method for an autonomous driving virtual environment according to an embodiment of this application. An implementation process of the method mainly includes steps S110 to S 130. The following sequentially describes the steps.

S 110: Load a virtual traffic scenario, where a first virtual object and a second virtual object are configured in the virtual traffic scenario.

In this embodiment, it is preset that different traffic scenarios are stored in the test scenario library 10, and related introduction information of the traffic scenarios may be presented to a user on a human-computer interaction interface. The related information is, for example, information such as a brief introduction, a diagram, a tested function, or a trainable function related to the traffic scenario. Then, a corresponding traffic scenario is loaded based on selection of the user on a traffic scenario, or selection on a to-be-tested function or a to-be-trained function. For a specific example of the traffic scenario, refer to descriptions of the foregoing test scenario library 10. Details are not described again.

In some embodiments, testing or training of a function involves a complex scenario including a plurality of traffic scenarios. In this case, the complex scenario corresponding to the function may be prepared in advance, and then the function and related information of the function are presented to the driver on the human-computer interface. Then, a corresponding complex scenario is loaded based on selection of the driver on a to-be-tested function, or selection on a to-be-trained function.

In some embodiments, some traffic scenarios may alternatively be loaded or unloaded in real time in the test process, to update a used virtual traffic scenario, so as to implement, for example, loading or unloading of a dangerous working condition scenario, updating of a traffic environment scenario, or updating of a vehicle driving environment. In some embodiments, each traffic scenario may be loaded once or loaded for a plurality of times. When the traffic scenario is loaded for a plurality of times, a same scenario is reproduced for a plurality of times.

In this embodiment, a virtual object is further loaded to the virtual traffic scenario. In this embodiment, a vehicle dynamics model is configured for the virtual object, that is, a vehicle is simulated by using the virtual object. When configured vehicle dynamics models are different, simulated vehicles are also different. Therefore, the virtual object may simulate various vehicles, including, for example, a car, a sport utility vehicle (sport utility vehicle, SUV), a multi-purpose vehicle (Multi-purpose vehicle, MPV), a bus, a truck, or another land transport apparatus including a cargo truck or a passenger vehicle. A motor vehicle further includes a hybrid vehicle, an electric vehicle, a fuel vehicle, a plug-in hybrid electric vehicle, a fuel cell vehicle, and another alternative fuel vehicle. The hybrid electric vehicle is a vehicle having two or more power sources, and the electric vehicle includes a battery electric vehicle, an extended-range electric vehicle, and the like. In some other embodiments, a dynamics model of another transportation means may alternatively be configured for the virtual object. For example, the dynamics model may be a dynamics model of a water transportation means including various ships and boats, or a dynamics model of an aircraft, to construct an autonomous driving virtual environment in a water transportation scenario or an aviation scenario.

In this embodiment, the virtual object may travel in the loaded traffic scenario according to a specified trajectory, or automatically travel in the loaded traffic scenario according to a specific rule, or travel under control. The virtual object may be bound to the autonomous driving system to travel under control of the autonomous driving system, or may be bound to the driving simulator to travel under control of the driving simulator. An unbound virtual object may travel according to a specified trajectory or automatically travel. For ease of description, the virtual object bound to the autonomous driving system is referred to as a first virtual object, and another virtual object is referred to as a second virtual object.

A quantity of first virtual objects is not limited, and may be related to a quantity of autonomous driving systems. A quantity of second virtual objects is not limited, and may not be less than a quantity of driving simulators.

S 120: Obtain control information, where the control information is used to control the first virtual object to travel in the virtual traffic scenario.

In this embodiment, the control information is sent by the tested autonomous driving system, and traveling of the bound first virtual object is controlled based on the control information.

In this embodiment, when the method is applied to a scenario in which there is one autonomous driving system, the autonomous driving system is bound to one first virtual object. In this way, control information of the autonomous driving system is received, and the first virtual object is controlled.

In some embodiments, the method may be applied to a scenario including a plurality of autonomous driving systems. Each autonomous driving system is bound to one first virtual object. In this way, control information of each autonomous driving system is received, and the first virtual object bound to each autonomous driving system is controlled. Autonomous driving algorithms of the plurality of autonomous driving systems may be the same or may be different.

S130: Obtain a control signal of a driving simulator, where the control signal of the driving simulator is used to control traveling of the second virtual object.

In some embodiments, different driving simulators may be controlled by drivers of different driving styles (for example, a radical style or a reliable style), and a corresponding driver drives a corresponding second virtual object in the virtual traffic scenario based on a driving habit of the driver. In this way, a real driving game behavior with the first virtual object in the virtual traffic scenario is simulated.

In this embodiment, this step may include the following two cases. The two cases may both exist. That the two cases both exist means that some driving simulators match a first case, and some driving simulators match a second case.

In the first case, a binding relationship between a driving simulator and a to-be-controlled virtual object may change in a process of constructing the autonomous driving virtual environment.

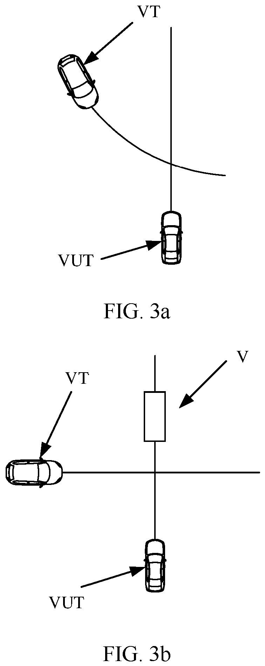

In an implementation of the first case, a control signal of a driving simulator is obtained when a second virtual object is capable of affecting traveling of the first virtual object, where the control signal of the driving simulator is used to control traveling of the second virtual object. For example, in the process of constructing the autonomous driving virtual environment or after construction is completed, when it is determined that a second virtual object appears within a specific distance to the first virtual object, or when a traveling speed of the first virtual object exceeds a specified value within a specific distance, or when a relative speed between the first virtual object and a second virtual object within the distance exceeds a specified value, it may be determined that the second virtual object is capable of affecting the traveling of the first virtual object. In this case, the second virtual object may be bound to a driving simulator, and travel under control of the driving simulator. A binding process may include: displaying the second virtual object on a human-computer interaction interface provided by the driving simulator, and binding, in response to a confirmation operation of a driver, the second virtual object to the driving simulator operated by the driver. Some cases in which the second virtual object is capable of affecting traveling of the first virtual object are described below by using examples with reference to FIG. 3a to FIG. 3e.

In another implementation of the first case, selection of the driver is received on the human-computer interaction interface provided by the driving simulator, and any unbound second virtual object selected by the driver is bound to the driving simulator used by the driver. In this implementation, whether the second virtual object is capable of affecting the traveling of the first virtual object is not considered. This provides the driver with more choices about the to-be-controlled second virtual object.

In the second case, a binding relationship between a driving simulator and a to-be-controlled virtual object does not change in a process of constructing the autonomous driving virtual environment. For ease of description, a virtual object bound in this manner is also referred to as a third virtual object in embodiments of this application. In an implementation, when construction of the autonomous driving virtual environment starts, selection of a driver on the virtual object is received on a human-computer interaction interface provided by the driving simulator, to bind the virtual object to the driving simulator.

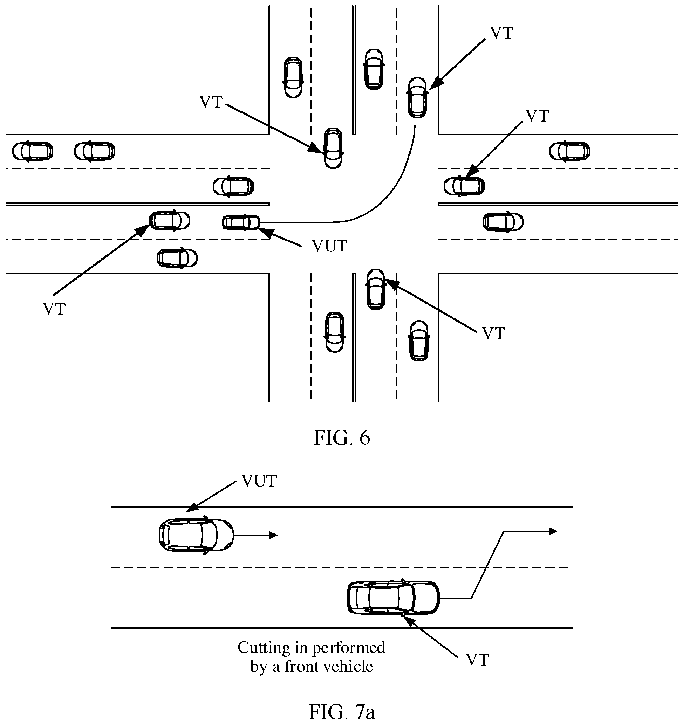

In some embodiments, when the second virtual object in the first case is not bound to the driving simulator and the second virtual object does not affect the traveling of the first virtual object, the second virtual object may travel in the virtual traffic scenario based on the first data. The first data on which traveling of the second virtual object is based may be traveling data that is of a real vehicle and that is obtained from a real traffic scenario through actual collection. That the second virtual object does not affect the traveling of the first virtual object may be understood as the following: The second virtual object does not contact (for example, collide with or scratch) the first virtual object, or a traveling behavior or a traveling path of the first virtual object does not change due to a traveling behavior of the second virtual object. For details, refer to the following several examples in which the second virtual object does not affect the traveling of the first virtual object. The second virtual object may travel in the virtual traffic scenario based on the first data. This is equivalent to reproduction of the real traffic scenario. Therefore, traveling data of the second virtual object in this case comes from a traveling trajectory of a reproduced real vehicle. This case is further described below by using an embodiment corresponding to FIG. 6.

In some embodiments, for the foregoing first case, when the second virtual object is not bound to the driving simulator, data on which the traveling of the second virtual object is based may alternatively be data that enables the second virtual object to autonomously travel in the virtual traffic scenario, that is, the second virtual object automatically travels. In some embodiments, the data may be autonomous traveling control data, for example, may be autonomous traveling control data that has a highest priority of complying with a traffic rule, or may be autonomous traveling control data that has a highest priority of complying with a traffic rule and a second priority of avoiding a collision.

In some embodiments, that the second virtual obj ect is capable of affecting the traveling of the first virtual object is related to one or more of the following: a distance between the second virtual object and the first virtual object; a traveling direction of the second virtual object and a traveling direction of the first virtual object; a traveling speed of the second virtual object or a traveling speed of the first virtual object; a lane in which the second virtual object or the first virtual object is located; a traveling trajectory of the second virtual object or a traveling trajectory of the first virtual object; a dynamics model of the second virtual object or a dynamics model of the first virtual object; and the like. For ease of understanding, an example is used below for description.

For example, when the distance between the second virtual object and the first virtual object is less than a preset value (that is, when a second virtual object appears within a distance range of the first virtual object), it may be considered that the second virtual object is capable of affecting the traveling of the first virtual object; or when the distance between the second virtual object and the first virtual object is not less than a preset value, it may be considered that the second virtual object does not affect the traveling of the first virtual object.

For another example, the first virtual object and the second virtual object have a same traveling direction and are located in a same lane, and the second virtual object is located behind the first virtual object. When a speed of the first virtual object is small and a speed of the second virtual object is large (a relative speed between the first virtual object and the second virtual object exceeds a specified value), it may also be considered that the second virtual object is capable of affecting the traveling of the first virtual object. When the same lane in the foregoing conditions is changed to different lanes, especially non-adjacent lanes, it may be considered that the second virtual object does not affect the traveling of the first virtual object. Alternatively, when the second virtual object in the foregoing conditions is changed from being located behind the first virtual object to being located in front of the first virtual object, it may be considered that the second virtual object does not affect the traveling of the first virtual object. Alternatively, when the speed of the first virtual object in the foregoing conditions is changed from being less than the speed of the second virtual object to being greater than the speed of the second virtual object, it may be considered that the second virtual object does not affect the traveling of the first virtual object.

For another example, in a crossroad area, when the first virtual object is a traveling trajectory that is about to turn left, and the second virtual object is about to go straight through the crossroad and travel into a lane into which the first virtual object is about to travel, it may be considered that the second virtual object is capable of affecting the traveling of the first virtual object. When the first virtual object and the second virtual object travel into different lanes, or traveling trajectories of the first virtual object and the second virtual object do not intersect, it may be considered that the second virtual object does not affect the traveling of the first virtual object.

For another example, when the distance between the first virtual object and the second virtual object is considered, a dynamics model of each of the first virtual object and the second virtual object may be further combined. For example, a braking distance corresponding to the second virtual object when the dynamics model corresponding to the second virtual object is a cargo truck model is different from a braking distance corresponding to the second virtual object when the dynamics model corresponding to the second virtual object is a car model, and therefore, safe distances between the second virtual object and the first virtual object are also different. In other words, distances by which the second virtual object affects the first virtual object are different. In other words, the distance between the second virtual object and the first virtual object may be related to the dynamics models.

With reference to FIG. 3a to FIG. 3e, the following describes, by using examples, some other cases in which the second virtual object is capable of affecting the traveling of the first virtual object. In the examples in FIG. 3a to FIG. 3e, the first virtual object may be a vehicle controlled by the tested autonomous driving system. The vehicle is bound to the tested autonomous driving system, and a traveling status of the vehicle reflects control logic of the tested autonomous driving system. Therefore, the vehicle may be referred to as a vehicle under test (Vehicle Under Test, VUT). Therefore, in the example, the VUT is used to represent the first virtual object. The second virtual object is a vehicle target (Vehicle Target, VT) that may be controlled by the driving simulator. Therefore, in the example, the VT is used to represent the second virtual object. An obstacle in the autonomous driving virtual environment may be a vehicle (Vehicle, V). Therefore, in the example, the V is used to represent an obstacle. The obstacle may be a fixed obstacle, or may be a mobile obstacle, and the obstacle may be one of the second virtual objects. A straight line or a curve in the figure indicates an estimated traveling route of a vehicle. For ease of illustration, FIG. 3a to FIG. 3e show only vehicles and routes, and do not show content such as a lane and a traffic sign. The following describes cases corresponding to these figures.

FIG. 3a shows an example in which the second virtual object is capable of affecting the first virtual object in an intersection area. In this scenario, the first virtual object VUT goes straight along a lane line and passes through a crossroad, and the second virtual object VT is about to turn left and pass through the crossroad. Because estimated traveling routes of the first virtual object VUT and the second virtual object VT intersect, in this case, it may be considered that the second virtual object VT may affect traveling of the first virtual object VUT.

FIG. 3b shows an example in which the second virtual object VT is about to traverse between the first virtual object VUT and the obstacle V Because the estimated traveling routes of the second virtual object VT and the first virtual object VUT intersect, in this case, it may be considered that the second virtual object VT is capable of affecting the traveling of the first virtual object VUT. In another aspect, the obstacle V may also be one of the second virtual objects. Because the obstacle V is on the estimated traveling route of the first virtual object VUT, in this case, it may be considered that the obstacle V is capable of affecting the traveling of the first virtual object VUT.

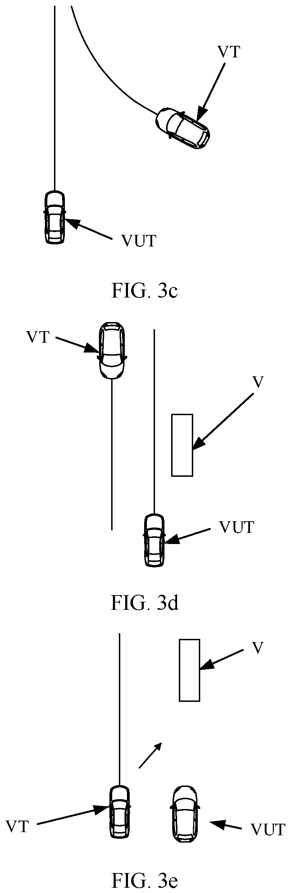

FIG. 3c shows an example in which the second virtual object VT is about to converge into a lane in which the first virtual object VUT is located. In this case, it may also be considered that the second virtual object VT is capable of affecting the traveling of the first virtual object VUT.

FIG. 3d shows an example in which the second virtual object VT and the first virtual object VUT travel relative to each other, and a passable width of a lane becomes narrower due to an obstacle V existing at a side-by-side position of the second virtual object VT and the first virtual object VUT. In this case, it may be considered that the second virtual object VT is capable of affecting the traveling of the first virtual object VUT. In another aspect, it may also be considered that the obstacle V (the obstacle V is considered as another second virtual object) is capable of affecting the traveling of the first virtual object VUT.

FIG. 3e shows an example in which the first virtual object VUT is about to converge into a lane in which the second virtual object VT is located, and an obstacle V exists in the front of the lane. In this case, it may also be considered that the second virtual object VT is capable of affecting the traveling of the first virtual object VUT. In another aspect, it may also be considered that the obstacle V (the obstacle V is considered as another second virtual object) is capable of affecting the traveling of the first virtual object VUT.

It should be understood that the foregoing is merely an example of describing a case in which the second virtual object is capable of affecting the first virtual object, and does not constitute a limitation on the second virtual object. When the driver considers that an unbound second virtual object (in some cases, including the foregoing obstacle V, for example, an obstacle is a parked vehicle) may affect the traveling of the first virtual object, the driver may take over the second virtual object (that is, bind the driving simulator of the driver to the second virtual object). After taking over the second virtual object, the driver may control traveling of the second virtual object based on a driving habit (for example, avoidance, preemption, or intersection intrusion) of the driver. In this way, a game scenario between vehicles in an environment close to a real driving environment can be generated.

In some embodiments, when a second virtual object is capable of affecting the traveling of the first virtual object, the second virtual object may be further highlighted. The driver of the driving simulator may be prompted in a highlighting manner, so that the driver can clearly observe a traveling status of the second virtual object, and can determine an occasion for taking over the second virtual object. After the driver takes over the second virtual object (that is, completes binding between the driving simulator of the driver and the second virtual object), identification information of the bound driving simulator may be further displayed to prompt the driver of the driving simulator. In some embodiments, the foregoing highlighting manner may include at least one of the following manners: displaying in a highlighted color, displaying in a blinking manner, displaying in a particular color, superimposing an indication box, and the like.

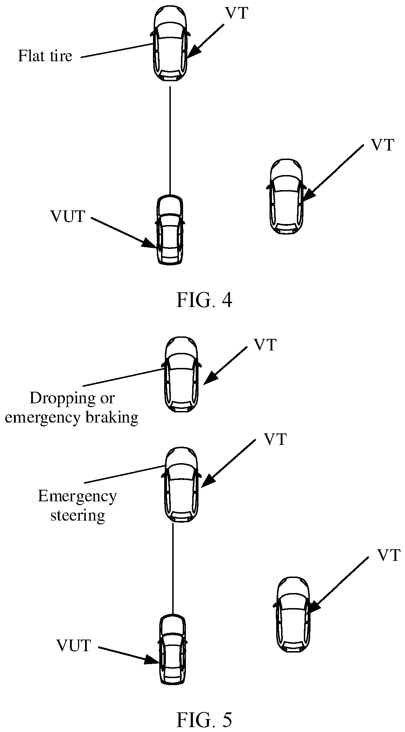

In this embodiment, a dangerous working condition may be further loaded to the virtual traffic scenario, a fault working condition may be loaded to the virtual object, or the like, to test the autonomous driving system in terms of dealing with an emergency. For example, the fault working condition is loaded to the first virtual object or the second virtual object. For example, data of a flat tire working condition is loaded to the first virtual object and/or the second virtual object. For another example, data of a working condition of a virtual object traversing a road is loaded to a traffic scenario (for example, data of a traveling trajectory traversing the road is loaded to an unbound second virtual object). For another example, data of an abnormal meteorological working condition, for example, data of rainstorm weather and snowstorm weather, is loaded to the virtual traffic scenario. The following provides descriptions with reference to examples shown in FIG. 4 and FIG. 5.

FIG. 4 is a diagram of loading a flat tire working condition to a second virtual vehicle. After data of the flat tire working condition is loaded to the second virtual object VT in front of a first virtual object VUT, the second virtual object VT is presented as being in a flat tire state. In this embodiment, the second virtual object VT having a flat tire is bound to a driving simulator. A driver with rich driving experience may quickly turn on hazard lights, hold a steering wheel tightly, release an acceleration pedal, and perform slow braking at an occasion considered suitable by the driver. However, a driver with less driving experience is panicked to handle such a dangerous working condition. Operations of different drivers in different driving styles reflect different traveling trajectories of the second virtual object VT after the second virtual object VT has the flat tire. The traveling trajectory is closer to a real driving trajectory of the driver, thereby implementing a test on the foregoing autonomous driving system in a more real working condition. In addition, it should be noted that the second virtual object VT loaded with the flat tire working condition may alternatively be in an unbound state.

FIG. 5 is a diagram of loading a dropping working condition or an emergency braking working condition to a second virtual vehicle. A second virtual object VT located in front of the first virtual object VUT is loaded with the working condition, and is presented as being in a case in which dropping or emergency braking occurs. The second virtual object VT may be bound to a driving simulator, or may not be bound to a driving simulator. For details, refer to related descriptions of the foregoing flat tire working condition. Details are not described again.

In this embodiment, each first virtual object may correspond to one of a plurality of dynamics models, and each second virtual object may correspond to one of a plurality of dynamics models.

The dynamics model corresponding to the first virtual object may match a vehicle to which the bound autonomous driving system is to be applied. The dynamics model of the second virtual object bound to the driving simulator may be selected by the driver, so that the driver selects a dynamics model of a vehicle expected by the driver.

In some embodiments, when a driving simulator with a different feature is used, dynamics models loaded to the second virtual objects may be matched based on a feature parameter of the driving simulator, to find a dynamics model that matches the feature parameter. The second virtual object that uses the dynamics model is bound to the driving simulator. In some embodiments, when a driving simulator with a different feature is used, a dynamics model may be obtained through matching based on a feature parameter of the driving simulator. The dynamics model is loaded to the second virtual object bound to the driving simulator.

The feature parameter of the driving simulator may include at least one of the following: a rotating range of a steering wheel of the driving simulator, a stepping stroke and a resistance change status of a braking pedal or an acceleration pedal, a parameter of a power mechanism that drives the driving simulator to simulate vehicle shaking and bumping, and the like.

To better understand this application, the following further describes some specific application examples of an autonomous driving virtual environment. The autonomous driving virtual environment is constructed based on the construction method for the autonomous driving virtual environment provided in embodiments of this application.

FIG. 6 shows a specific application example of the autonomous driving virtual environment. There is one first virtual object VUT and a plurality of second virtual objects VTs in the autonomous driving virtual environment, and a key second virtual obj ect around the first virtual object VUT may be identified based on a traveling trajectory of the first virtual object VUT. For example, VTs marked in FIG. 6 are the key second virtual objects in this embodiment. The key second virtual object herein is a second virtual object that is capable of affecting traveling of the first virtual object. The identified key second virtual object may be in a to-be-taken-over state (or referred to as a to-be-bound state). A driver determines a takeover occasion based on a driving habit and a driving style of the driver. After a key second virtual object is taken over (that is, after the key second virtual object is bound to a driving simulator), the driver may manipulate the driving simulator to control traveling of the key second virtual object, for example, may control the traveling of the key second virtual object to avoid collision with the first virtual object VUT, so that the test on the autonomous driving system that controls traveling of the first virtual object VUT continues (it is assumed herein that one of conditions for ending the test on the autonomous driving system is that a collision occurs on the controlled first virtual object).

The following describes an example to which FIG. 6 is applicable. For each second virtual object that is not taken over (including a to-be-taken-over second virtual object), a traveling trajectory of the second virtual object is according to a predetermined trajectory. In an implementation, the example in FIG. 6 is based on a real scenario. For example, data of a loaded traffic scenario, including traffic environment scenario data (including road data) and traffic flow data, comes from data collected based on a real road section condition. Data extraction may be performed on the collected real data, to obtain a traveling trajectory of each vehicle in the collected real data (for example, vehicle data is extracted by using an image recognition technology), or the data of the traffic environment scenario of the road section may be directly reproduced based on a high-definition map. The data of the traffic environment scenario is loaded to the autonomous driving virtual environment, and each first or second virtual object corresponding to each vehicle traveling trajectory is loaded to the autonomous driving virtual environment, so that playback or reproduction of a real map and the traffic flow data is implemented. The first virtual object may alternatively correspond to a real tested vehicle in the real traffic flow data. The tested vehicle has an autonomous driving system, and the autonomous driving system controls traveling of the tested vehicle.

When an autonomous driving algorithm of the tested autonomous driving system that is bound to the first virtual object changes (for example, the algorithm is self-updated, or another set of algorithms is loaded), a traveling trajectory of the first virtual object in the virtual traffic scenario may change. Because a traveling trajectory of each second virtual object matches the previously obtained real vehicle data, that is, the traveling trajectory, a traveling speed, a posture, and the like of each second virtual object are predetermined, it is possible that the second virtual object collides with the first virtual object that changes the traveling trajectory. However, the driver takes over the second virtual object that affects traveling of the first virtual object, so that the traveling trajectory of the second virtual object can be changed, and collision can be reduced or avoided. Therefore, the test can continue.

When the taken-over second virtual object is controlled to travel so that the traveling of the first virtual object is not affected, the driver may release takeover for the second virtual object on the human-computer interaction interface of the driving simulator, to take over another second virtual object that affects the traveling of the first object in this case. In a release manner, the taken-over second virtual object is manipulated to travel to a rear side of the first virtual object for a specific distance and then is released. In this case, even if the second virtual object collides with another second virtual object that is not taken over, the traveling of the first virtual object is not affected, that is, the test on the autonomous driving system bound to the first virtual object is not affected, so that the test can continue.

Another specific application example of the autonomous driving virtual environment is applied to provide various test working conditions for the autonomous driving system, to test the autonomous driving system. In this embodiment, the virtual objects may include the first virtual obj ect bound to the tested autonomous driving system, may include the second virtual obj ect bound to the driving simulator, and may include a third virtual obj ect that is bound to the driving simulator and whose binding relationship with the driving simulator does not change. In the test, after various test working conditions are loaded, the driver may manipulate, based on a driving habit of the driver, the driving simulator to control the bound second or third virtual object to travel in the autonomous driving virtual environment. In a plurality of groups of tests, an initial location and an initial speed of each virtual object may be randomly set. Driving simulators corresponding to different second or third virtual objects are manipulated by drivers of different styles, to implement a real-time driving game.

In this embodiment, the loaded test working condition may include a typical working condition in the embodiments corresponding to FIG. 3a to FIG. 3e, or may include the dangerous working condition in the embodiments corresponding to FIG. 4 and FIG. 5, or the like. For details, refer to the foregoing corresponding related descriptions. Details are not described again. Compared with a conventional simulation test in which a traveling trajectory of a virtual vehicle is predefined, this embodiment introduces drivers with different driving styles and different driving experiences, so that a traveling behavior of a related virtual object in each test working condition is more real, and test randomness is increased. Therefore, comprehensiveness of the test on the autonomous driving system is improved.

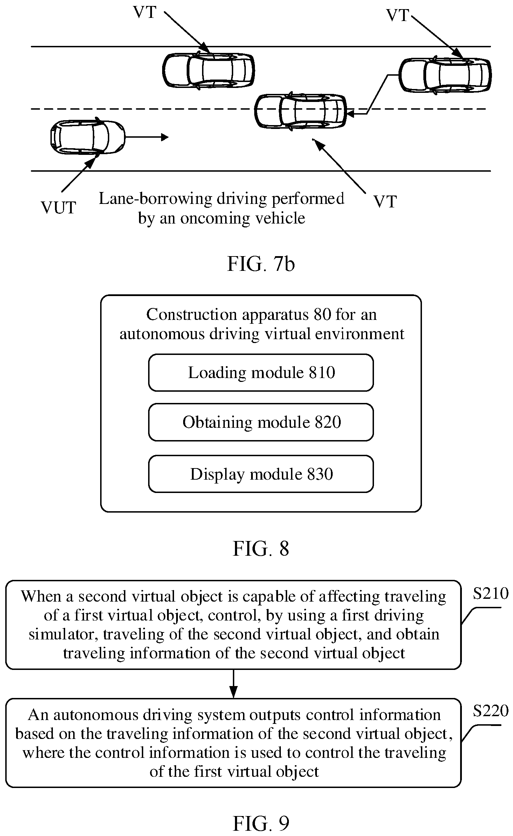

FIG. 7a and FIG. 7b are diagrams of another specific application example of an autonomous driving virtual environment according to an embodiment of this application. The example is applied to a test scenario in which an admission standard is performed on an autonomous driving system.

Generally, an admission test scenario of the autonomous driving system includes a simulation test, a closed site test, and an actual road test. In the simulation test and the closed site test, both a trajectory of a traffic participant and a driving action of the traffic participant are predefined or planned, and it is difficult to reflect a driving game in a real driving environment. Although the actual road test is performed in a real traffic scenario, behavior data of a traffic participant is difficult to obtain and cannot be comprehensively evaluated. In addition, at different test time points, on different test road sections, and in different traffic conditions, there is a large difference between autonomous driving systems, and it is difficult to implement comprehensive and objective evaluation on different autonomous driving systems. The autonomous driving virtual environment provided in embodiments of this application may be used as an "intermediate state" between the simulation test and the actual road test. Driving data (the driving data is traveling data of the second or third virtual object controlled by using the driving simulator) of a traffic participant may be obtained, and a plurality of different driving working conditions and traffic flows may be further simulated, to implement a plurality of tests on the autonomous driving system, thereby improving comprehensiveness and objectivity of the test on the autonomous driving system.

In FIG. 7a and FIG. 7b, a VUT represents a first virtual object bound to the autonomous driving system, and a VT represents a second virtual object bound to a driving simulator. In the test scenario of the admission standard for the self-driving algorithm, a real driving behavior game is implemented through interaction between the second virtual object and the first virtual object. In FIG. 7a, a driver manipulates the driving simulator to control a second virtual object VT to cut in to front of the first virtual object VUT, to implement a test on the autonomous driving system in a scenario in which a front vehicle performs cutting in. In FIG. 7b, the driver manipulates the driving simulator to control the first virtual object VUT that travels opposite to the second virtual objects VT to perform lane-borrowing driving, to implement a test on the autonomous driving system in a scenario in which an oncoming vehicle performs lane-borrowing driving. Both the two scenarios in FIG. 7a and FIG. 7b are typical scenarios of an admission test on the autonomous driving system.

In a scenario of the admission test on the autonomous driving system, different road conditions (for example, different traffic flows, road conditions in different time periods, and road conditions in different weather conditions) may be further loaded to the autonomous driving virtual environment based on an admission standard requirement, to test the autonomous driving system. For details, refer to the foregoing related descriptions of the test scenario library 10. Details are not described again.

Another embodiment of this application provides a construction apparatus for an autonomous driving virtual environment. The apparatus may be implemented by a software system, or may be implemented by a hardware device, or may be implemented by a combination of a software system and a hardware device. The construction apparatus for the autonomous driving virtual environment is configured to perform content described in steps S 110 to S 130 in FIG. 2.

It should be understood that FIG. 8 is merely a diagram of an example of a structure of a construction apparatus for an autonomous driving virtual environment. Division of functional modules in the construction apparatus for the autonomous driving virtual environment is not limited in this application. As shown in FIG. 8, the construction apparatus for the autonomous driving virtual environment may be logically divided into a plurality of modules, each module may have a different function, and the function of each module may be implemented by a processor in a computing device by reading and executing instructions in a memory. For example, a construction apparatus 80 for an autonomous driving virtual environment includes a loading module 810 and an obtaining module 820.

The loading module 810 is configured to load a virtual traffic scenario, where a first virtual object and a second virtual object are configured in the virtual traffic scenario. Specifically, the loading module 810 may be configured to perform step S 110 in the foregoing construction method for the autonomous driving virtual environment and any optional example in step S 110.

The obtaining module 820 is configured to obtain control information, where the control information is used to control the first virtual object to travel in the virtual traffic scenario.

The obtaining module 820 is further configured to obtain a control signal of a first driving simulator when the second virtual object is capable of affecting traveling of the first virtual object, where control information of the first driving simulator is used to control traveling of the second virtual object.

Specifically, the obtaining module 820 may be configured to perform steps S120 and S130 in the foregoing construction method for the autonomous driving virtual environment and any optional example in steps S120 and S 130.

In some embodiments, the obtaining module 820 may be further configured to: when the second virtual object does not affect the traveling of the first virtual object, enable the second virtual object to travel in the virtual traffic scenario based on first data, where the first data is traveling data that is of a real vehicle and that is obtained from a real traffic scenario.

The obtaining module 820 may be further configured to: when the second virtual object does not affect the traveling of the first virtual object, enable the second virtual object to travel in the virtual traffic scenario based on second data, where the second data is data that enables the second virtual object to autonomously travel in the virtual traffic scenario.

In addition, in the construction apparatus 80 for the autonomous driving virtual environment, whether the second virtual object affects the traveling of the first virtual object may be further determined based on one or more of the following: a distance between the second virtual object and the first virtual object; a traveling direction of the second virtual object or a traveling direction of the first virtual object; a traveling speed of the second virtual object or a traveling speed of the first virtual object; a lane in which the second virtual object or the first virtual object is located; a traveling trajectory of the second virtual object or a traveling trajectory of the first virtual object; and a dynamics model of the second virtual object or a dynamics model of the first virtual object.

In this embodiment, the construction apparatus for the autonomous driving virtual environment further includes a display module 830, configured to highlight the second virtual obj ect.

In this embodiment, the loading module 810 is further configured to load a fault working condition to the first virtual object or the second virtual object. The loading module 810 is further configured to load a dangerous working condition to the virtual traffic scenario.

In some embodiments, the first virtual object corresponds to at least one dynamics model, and the second virtual object corresponds to at least one dynamics model.

In an optional implementation, the obtaining module 820 is further configured to obtain a control signal of a second driving simulator, where a control signal of a second driving simulation controller is used to control traveling of a third virtual object, and the third virtual object is an object configured in the virtual traffic scenario.

FIG. 9 is a flowchart of a running method for an autonomous driving system according to an embodiment of this application. An implementation process of the method mainly includes steps S210 and S220. The following sequentially describes the steps.

S210: When a second virtual object is capable of affecting traveling of a first virtual object, control, by using a first driving simulator, the second virtual object to travel in an autonomous driving virtual environment, and obtain traveling information of the second virtual object by using the autonomous driving system.

Both the second virtual object and the first virtual object are configured in the autonomous driving virtual environment.

In this embodiment, for a condition for determining whether the second virtual object is capable of affecting the first virtual object, refer to the foregoing embodiment. Therefore, details are not described in this embodiment again.

When the second virtual object is capable of affecting the traveling of the first virtual object, a driver controls the first driving simulator to control the second virtual object to travel in the autonomous driving virtual environment. In this case, the autonomous driving system is used to collect and obtain traveling information of the second virtual object, to guide traveling of the first virtual object.

S220: The autonomous driving system outputs control information based on the traveling information of the second virtual object, where the control information is used to control the first virtual object to travel in the virtual traffic scenario.

In this embodiment, the autonomous driving system controls traveling information of the first virtual object based on the traveling information of the second virtual object, so that the first virtual object and the second virtual object do not collide.

It should be understood that the autonomous driving system may further obtain traveling information of a third virtual object, where the traveling information of the third virtual object is associated with a control signal of a second driving simulator, that is, traveling of the virtual object is controlled by using the second driving simulator.

In an optional implementation, the traveling information of the first virtual object may be output, and the tested autonomous driving system may be evaluated based on the output information, that is, a test result may be obtained.

Another embodiment of this application provides a running apparatus 90 in an autonomous driving system. The apparatus may be implemented by a software system, or may be implemented by a hardware device, or may be implemented by a combination of a software system and a hardware device.

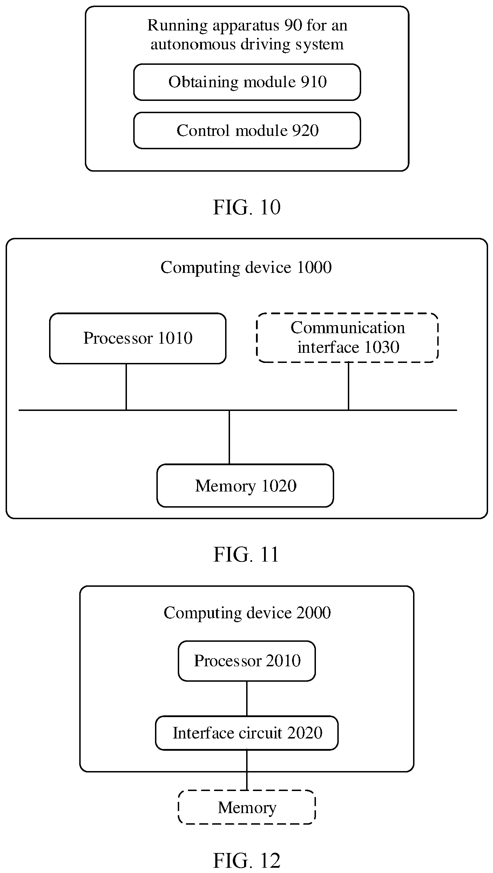

It should be understood that FIG. 10 is merely a diagram of an example of a structure of a running apparatus for an autonomous driving system. Division of functional modules in the running apparatus for the autonomous driving system is not limited in this application. As shown in FIG. 10, the running apparatus for the autonomous driving system may be logically divided into a plurality of modules, each module may have a different function, and the function of each module may be implemented by a processor in a computing device by reading and executing instructions in a memory. For example, the running apparatus 90 in the autonomous driving system includes an obtaining module 910 and a control module 920. The running apparatus for the autonomous driving system is configured to perform content described in steps S210 and 5220 in FIG. 9. Details may be as follows.

The obtaining module 910 is configured to: when a second virtual object is capable of affecting traveling of a first virtual object, control, by using a first driving simulator, the second virtual object to travel in an autonomous driving virtual environment, and obtain traveling information of the second virtual object by using the autonomous driving system. Specifically, the obtaining module 910 may be configured to perform step S210 in the foregoing running method for the autonomous driving system and any optional example in step S210.

The control module 920 is configured by the autonomous driving system to output control information based on the traveling information of the second virtual object, where the control information is used to control the first virtual object to travel in the virtual traffic scenario. The second virtual object and the first virtual object are configured in the autonomous driving virtual environment. Specifically, the control module 920 may be configured to perform step S220 in the foregoing running method for the autonomous driving system and any optional example in step S220.

In some embodiments, the control module 920 is further configured to output traveling information of the first virtual object, where the traveling information of the first virtual object is used to test the autonomous driving system.

Another embodiment of this application provides an apparatus for testing an autonomous driving system. The apparatus includes: a driving simulator, the autonomous driving virtual environment constructed in the foregoing embodiment, and the autonomous driving system, where the autonomous driving virtual environment is communicatively connected to the driving simulator, and is communicatively connected to the autonomous driving system.

An embodiment of this application further provides a computing device, including a processor and a memory. The memory stores program instructions, and when the program instructions are executed by the processor, the processor is enabled to perform the method in the embodiment corresponding to FIG. 2 or each optional embodiment thereof.

FIG. 11 is a diagram of a structure of a computing device 1000 according to an embodiment of this application. The computing device 1000 includes a processor 1010 and a memory 1020.

It should be understood that the computing device 1000 shown in FIG. 11 may further include a communication interface 1030, and the communication interface 1030 may be configured to communicate with another device.

The processor 1010 may be connected to the memory 1020. The memory 1020 may be configured to store program code and data. Therefore, the memory 1020 may be a storage unit inside the processor 1010, or may be an external storage unit independent of the processor 1010, or may be a component including a storage unit inside the processor 1010 and an external storage unit independent of the processor 1010.

Optionally, the computing device 1000 may further include a bus. The memory 1020 and the communication interface 1030 may be connected to the processor 1010 through the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

It should be understood that in this embodiment of this application, the processor 1010 may be a central processing unit (Central Processing Unit, CPU). The processor may further be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like. Alternatively, the processor 1010 uses one or more integrated circuits, and is configured to execute a related program, to implement a technical solution provided in this embodiment of this application.

The memory 1020 may include a read-only memory and a random access memory, and provide instructions and data to the processor 1010. A part of the processor 1010 may further include a non-volatile random access memory. For example, the processor 1010 may further store information about a device type.

When the computing device 1000 runs, the processor 1010 executes computer-executable instructions in the memory 1020 to perform the operation steps of the foregoing method.

It should be understood that the computing device 1000 according to this embodiment of this application may correspond to a corresponding execution body of the methods according to the embodiments of this application, and the foregoing and other operations and/or functions of modules in the computing device 1000 are separately intended to implement corresponding procedures of the methods according to the embodiments. For brevity, details are not described herein again.

An embodiment of this application further provides another computing device. FIG. 12 is a diagram of a structure of another computing device 2000 according to this embodiment. The computing device 2000 includes: a processor 2010 and an interface circuit 2020. The processor 2010 accesses a memory through the interface circuit 2020, the memory stores program instructions, and when the program instructions are executed by the processor, the processor is enabled to perform the method in the embodiment corresponding to FIG. 2 or FIG. 9. In addition, the computing device may further include a communication interface, a bus, and the like. For details, refer to descriptions in the embodiment shown in FIG. 11. Details are not described again. For example, the interface circuit 2020 may be a CAN bus or a LIN bus.

A person of ordinary skill in the art may be aware that units and algorithm steps in the examples described with reference to embodiments disclosed in this specification may be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When being executed by a processor, the program is used to perform a construction method for an autonomous driving virtual environment or a running method for an autonomous driving system. The method includes at least one of the solutions described in the foregoing embodiments.

The computer storage medium in embodiments of this application may use any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or component, or any combination thereof. A more specific example (non-exhaustive list) of the computer-readable storage medium includes: an electrically connected or portable computer disk with one or more wires, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In this document, the computer-readable storage medium may be any tangible medium that includes or stores a program, and the program may be used by or used in combination with an instruction execution system, apparatus, or component.

The computer-readable signal medium may be included in a baseband or may be used as a data signal propagated as a part of a carrier, where the data signal carries computer-readable program code. The data signal propagated in this manner may be in a plurality of forms, including but not limited to an electromagnetic signal, an optical signal, or any suitable combination thereof. The computer-readable signal medium may alternatively be any computer-readable medium other than the computer-readable storage medium, and the computer-readable medium may send, propagate, or transmit a program used by or used in combination with an instruction execution system, apparatus, or component.

Program code included in the computer-readable medium may be transmitted by using any proper medium, including but not limited to a wireless manner, an electric wire, an optical cable, RF, or any suitable combination thereof.

Computer program code for performing the operations in this application may be written in one or more programming languages or a combination thereof. The programming languages include object-oriented programming languages-such as Java, Smalltalk, and C++, and further include conventional process programming languages-such as a "C" language or a similar programming language. The program code may be completely executed on a user computer, partially executed on a user computer, executed as an independent software package, partially executed on a user computer and partially executed on a remote computer, or completely executed on a remote computer or a server. In a case involving a remote computer, the remote computer may be connected to a user computer through any type of network, including a local area network (LAN) or a wide area network (WAN), or may be connected to an external computer (for example, may be connected to the external computer through the internet by using an internet service provider).

In this specification and claims, the terms such as "first, second, third, and the like" or similar terms such as a module A, a module B, and a module C are merely used to distinguish between similar objects, and do not represent a particular order of the objects. It may be understood that particular orders or sequences may be exchanged if permitted, so that embodiments of this application described herein may be implemented in an order other than the order illustrated or described herein.

In the following descriptions, involved reference numerals such as S110 and S 120 that indicate steps do not necessarily indicate that the steps are to be performed based on the order, and consecutive steps may be exchanged if permitted, or may be performed simultaneously.

The term "include" used in the specification and claims should not be construed as being limited to the content listed below; and the term does not exclude other elements or steps. Therefore, it should be interpreted as specifying presence of the feature, whole, step or component mentioned, but not excluding presence or addition of one or more other features, wholes, steps, or components and groups thereof. Therefore, the expression "a device including apparatuses A and B" should not be limited to a device consisting of only components A and B.

"One embodiment" or "an embodiment" mentioned in this specification means that a particular feature, structure, or characteristic described in combination with this embodiment is included in at least one embodiment of this application. Therefore, the term "in one embodiment" or "in an embodiment" appearing throughout this specification does not necessarily refer to a same embodiment, but may refer to a same embodiment. Further, in one or more embodiments, the particular features, structures, or characteristics can be combined in any proper manner, as is apparent to a person of ordinary skill in the art from the present disclosure.

Unless otherwise defined, all technical and scientific terms used in this specification have same meanings as those usually understood by a person skilled in the art of this application. In case of any inconsistency, the meaning described in this specification or the meaning obtained based on the content recorded in this specification shall be used. In addition, the terms used in this specification are merely for the purpose of describing embodiments of this application, but are not intended to limit this application.

It should be noted that the foregoing are merely example embodiments and applied technical principles of this application. A person skilled in the art may understand that this application is not limited to the particular embodiments described herein, and a person skilled in the art can make various obvious changes, readjustments, and replacements without departing from the protection scope of this application. Therefore, although this application is described in detail by using the foregoing embodiments, this application is not limited to the foregoing embodiments, and may further include more other equivalent embodiments without departing from the concept of this application. All of the embodiments fall within the protection scope of this application.

## Claims

1. A construction method for an autonomous driving virtual environment, wherein the method comprises:
loading a virtual traffic scenario, wherein a first virtual object and a second virtual object are configured in the virtual traffic scenario;
obtaining control information, wherein the control information is used to control the first virtual object to travel in the virtual traffic scenario; and
obtaining a control signal of a first driving simulator when the second virtual object is capable of affecting traveling of the first virtual object, wherein the control signal of the first driving simulator is used to control traveling of the second virtual object.

2. The construction method according to claim 1, wherein the method further comprises:
when the second virtual obj ect does not affect the traveling of the first virtual obj ect, traveling, by the second virtual object, in the virtual traffic scenario based on first data, wherein the first data is traveling data that is of a real vehicle and that is obtained from a real traffic scenario.

3. The construction method according to claim 1, wherein the method further comprises:
when the second virtual obj ect does not affect the traveling of the first virtual obj ect, traveling, by the second virtual object, in the virtual traffic scenario based on second data, wherein the second data is data that enables the second virtual object to autonomously travel in the virtual traffic scenario.

4. The construction method according to any one of claims 1 to 3, wherein the method further comprises: whether the second virtual object affects the traveling of the first virtual object is determined based on one or one of the following:
a distance between the second virtual object and the first virtual object;
a traveling direction of the second virtual object or a traveling direction of the first virtual obj ect;
a traveling speed of the second virtual object or a traveling speed of the first virtual object;
a lane in which the second virtual object or the first virtual object is located;
a traveling trajectory of the second virtual object or a traveling trajectory of the first virtual object; and
a dynamics model of the second virtual object or a dynamics model of the first virtual object.

5. The construction method according to any one of claims 1 to 4, wherein the method further comprises: highlighting the second virtual object.

6. The construction method according to any one of claims 1 to 5, wherein the method further comprises one or more of the following:
loading a fault working condition to the first virtual object or the second virtual object; and
loading a dangerous working condition to the virtual traffic scenario.

7. The construction method according to any one of claims 1 to 6, wherein the method further comprises:
the first virtual object corresponds to at least one dynamics model; and
the second virtual object corresponds to at least one dynamics model.

8. The construction method according to any one of claims 1 to 7, wherein the method further comprises:
configuring a third virtual object in the virtual traffic scenario; and
obtaining a control signal of a second driving simulator, wherein the control signal of the second driving simulator is used to control traveling of the third virtual object.

9. A construction apparatus for an autonomous driving virtual environment, wherein the apparatus comprises:
a loading module, configured to load a virtual traffic scenario, wherein a first virtual object and a second virtual object are configured in the virtual traffic scenario; and
an obtaining module, configured to obtain control information, wherein the control information is used to control the first virtual object to travel in the virtual traffic scenario, wherein
the obtaining module is further configured to obtain a control signal of a first driving simulator when the second virtual object is capable of affecting traveling of the first virtual object, wherein the control signal of the first driving simulator is used to control traveling of the second virtual object.

10. The construction apparatus according to claim 9, wherein the obtaining module is further configured to: when the second virtual object does not affect the traveling of the first virtual object, enable the second virtual object to travel in the virtual traffic scenario based on first data, wherein the first data is traveling data that is of a real vehicle and that is obtained from a real traffic scenario.

11. The construction apparatus according to claim 9, wherein the obtaining module is further configured to: when the second virtual object does not affect the traveling of the first virtual object, enable the second virtual object to travel in the virtual traffic scenario based on second data, wherein the second data is data that enables the second virtual object to autonomously travel in the virtual traffic scenario.

12. The construction apparatus according to any one of claims 9 to 11, wherein whether the second virtual object affects the traveling of the first virtual object is determined based on one or one of the following:
a distance between the second virtual object and the first virtual object;
a traveling direction of the second virtual object or a traveling direction of the first virtual obj ect;
a traveling speed of the second virtual object or a traveling speed of the first virtual object;
a lane in which the second virtual object or the first virtual object is located;
a traveling trajectory of the second virtual object or a traveling trajectory of the first virtual object; and
a dynamics model of the second virtual object or a dynamics model of the first virtual object.

13. The construction apparatus according to any one of claims 9 to 12, wherein the apparatus further comprises:
a display module, configured to highlight the second virtual object.

14. The construction apparatus according to any one of claims 9 to 13, wherein the loading module is further configured to load a fault working condition to the first virtual object or the second virtual object; and
the loading module is further configured to load a dangerous working condition to the virtual traffic scenario.

15. The construction apparatus according to any one of claims 9 to 14, wherein the first virtual object corresponds to at least one dynamics model, and the second virtual object corresponds to at least one dynamics model.

16. The construction apparatus according to any one of claims 9 to 15, wherein the obtaining module is further configured to obtain a control signal of a second driving simulator, wherein a control signal of a second driving simulation controller is used to control traveling of a third virtual object, and the third virtual object is an object configured in the virtual traffic scenario.

17. A running method for an autonomous driving system, wherein the method comprises:
when a second virtual object is capable of affecting traveling of a first virtual object, controlling, by using a first driving simulator, the second virtual object to travel in an autonomous driving virtual environment, and obtaining traveling information of the second virtual object by using the autonomous driving system; and
outputting, by the autonomous driving system, control information based on the traveling information of the second virtual object, wherein the control information is used to control the first virtual object to travel in a virtual traffic scenario, wherein
the second virtual object and the first virtual object are configured in the autonomous driving virtual environment.

18. The running method according to claim 17, wherein the method further comprises:
obtaining, by the autonomous driving system, traveling information of a third virtual object, wherein the traveling information of the third virtual object is associated with a control signal of a second driving simulator, wherein
the autonomous driving system further outputs the control information based on the traveling information of the third virtual object.

19. The running method according to claim 17 or 18, wherein the method further comprises:
outputting traveling information of the first virtual object, wherein the traveling information of the first virtual object is used to test the autonomous driving system.

20. A running apparatus for an autonomous driving system, wherein the apparatus comprises:
an obtaining module, configured to: when a second virtual object is capable of affecting traveling of a first virtual object, control, by using a first driving simulator, the second virtual object to travel in an autonomous driving virtual environment, and obtain traveling information of the second virtual object by using the autonomous driving system; and
a control module, used in the autonomous driving system and configured to output control information based on the traveling information of the second virtual object, wherein the control information is used to control the first virtual object to travel in a virtual traffic scenario, wherein
the second virtual object and the first virtual object are configured in the autonomous driving virtual environment.

21. The running apparatus according to claim 20, wherein the control module is used in the autonomous driving system and further configured to:
obtain traveling information of a third virtual object, wherein the traveling information of the third virtual object is associated with a control signal of a second driving simulator, wherein
the autonomous driving system further outputs the control information based on the traveling information of the third virtual object.

22. The running apparatus according to claim 20 or 21, wherein the control module is further configured to:
output traveling information of the first virtual object, wherein the traveling information of the first virtual object is used to test the autonomous driving system.

23. An apparatus for testing an autonomous driving system, wherein the apparatus comprises:
a driving simulator;
an autonomous driving virtual environment constructed based on the construction method for the autonomous driving virtual environment according to any one of claims 1 to 8; and
the autonomous driving system, wherein
the autonomous driving virtual environment is communicatively connected to the driving simulator, and is communicatively connected to the autonomous driving system.

24. A computing device, comprising:
a processor; and
a memory, wherein the memory stores program instructions, and when the program instructions are executed by the processor, the processor is enabled to perform the construction method for the autonomous driving virtual environment according to any one of claims 1 to 8, or to perform the running method for the autonomous driving system according to any one of claims 17 to 19.

25. A computer-readable storage medium, wherein the computer-readable storage medium stores program instructions, and when the program instructions are executed by a computer, the computer is enabled to perform the construction method for the autonomous driving virtual environment according to any one of claims 1 to 8, or to perform the running method for the autonomous driving system according to any one of claims 17 to 19.

26. A computer program product, wherein when the computer program product runs on one or more processors, the construction method for the autonomous driving virtual environment according to any one of claims 1 to 8 is implemented, or the running method for the autonomous driving system according to any one of claims 17 to 19 is performed.
